# EUROPÄISCHE PATENTANMELDUNG

(11) **EP 2 253 842 A1**
(43) Veröffentlichungstag der Anmeldung: **24.11.2010**
(21) Anmeldenummer: 09159996.9
(22) Anmeldetag: 12.05.2009
(51) Int. Cl.: F03D 7/04, F03D 9/00

(54) **Windturbine**

(71) Anmelder: Aresco SA, 1752 Villars sur Glane (CH)
(72) Erfinder: Scheibel, René, 17237 Blumenholz (DE)
(74) Vertreter: UEXKÜLL & STOLBERG

(57) **Zusammenfassung**

Die Erfindung betrifft eine Windturbine mit einem hydrostatischen Antriebsstrang.

Die Windturbine (1; 1'; 1") weist einen Rotor (2), mindestens einen ersten Generator (3), eine hydraulische Pumpe (4) und mindestens einen ersten hydraulischen Motor (6) auf. Die hydraulische Pumpe (4), der hydraulische Motor (6) sind über einen geschlossenen Kreislauf (8) miteinander verbunden. Des Weiteren weist die Windturbine (1; 1'; 1") eine Steuerung (12) zum Regulieren eines Volumenstroms im geschlossenen Kreislauf auf.

Erfindungsgemäß befindet sich zwischen der Pumpe (4) und dem Motor (6) ein die Hochdruckleitung und die Niederdruckleitung verbindendes stufenlos regulierbares Abspritzsystem (13; 13'), wobei die Steuerung das Abspritzsystem derart ansteuert, dass ein Anteil des Volumenstroms durch das Abspritzsystem fließt.

## Beschreibung

Gegenstand der vorliegenden Erfindung ist eine Windturbine nach dem Oberbegriff des Anspruchs 1.

Die Nutzung der Windkraft ist nicht nur aus ökologischen Gründen von großer Bedeutung: Da der Wind als kostenlose Energiequelle zur Verfügung steht, hat sich auch die ökonomische Bedeutung der Windkraft vergrößert.

Bei den meisten Windkraftanlagen treibt ein Rotor eine Welle an, welche mittel- oder unmittelbar mit einem Generator gekoppelt wird und diesen zur Stromerzeugung antreibt. Bereits früh wurde erkannt, dass zur Nutzung der unregelmäßig auftretenden Windkraft ein hydraulischer Antriebsstrang von Nutzen sein könnte.

So ist beispielsweise aus der CH 234 202 eine Windkraftanlage bekannt, bei welcher ein Rotor über eine Welle mit einer hydraulischen Pumpe gekoppelt ist, welche über einen geschlossenen Kreislauf mit einem hydraulischen Motor gekoppelt ist. Der hydraulische Motor treibt den Generator an. Bei dem hydraulischen Motor handelt es sich um einen Motor mit veränderbaren Schluckvolumen. Hierdurch ist es möglich, aufgrund der Verstellung des Schluckvolumens in Abhängigkeit von beispielsweise der Windgeschwindigkeit den Generator mit nahezu konstanter Drehzahl anzutreiben. Ein Nachteil dieser Windkraftanlage ist die unzureichende Steuerung und der Wirkungsgrad der Anlage.

Ein weiteres Beispiel für eine auf einem hydrostatischen Antrieb beruhende Windkraftanlage ist aus der JP 11-287178 A bekannt. Auch hier treibt ein Rotor eine hydraulische Pumpe an, welche über einen geschlossenen Kreislauf mit einem Motor mit veränderbarem Schluckvermögen verbunden ist. Als Mechanismen für die Verstellung des Schluckvolumens des hydraulischen Motors wird entweder eine vom Druck oder eine vom Volumenstrom abhängige servo-geregelte Steuerung vorgeschlagen. Ein Nachteil der vorgenannten Windkraftanlage ist ein nur unzureichender Wirkungsgrad des hydraulischen Antriebs und die Art der Steuerung der Verstellung.

Aufgabe der vorliegenden Erfindung ist es, eine Windturbine zu schaffen, welche die vorgenannten Nachteile zu verringert. Die Aufgabe wird mittels einer Windturbine, welche die im Anspruch 1 aufgeführten Merkmale aufweist, gelöst.

Die Windturbine weist einen Rotor, mindestens einen ersten Generator, eine hydraulische Pumpe welche über eine erste Welle mit dem Rotor verbunden und von diesem antreibbar ist, mindestens einem ersten hydraulischen Motor, welcher über eine zweite Welle mit dem mindestens einem ersten Generator verbunden ist sowie einen geschlossen Kreislauf auf, wobei der geschlossene Kreislauf eine Hochdruckleitung zum Führen eines hydraulischen Mediums von der Pumpe zu mindestens einem Motor und eine Niederruckleitung zur Führen des hydraulischen Mediums von mindestens einem Motor zur Pumpe aufweist. Hierbei ist zu beachten, dass im geschlossenen Kreislauf, insbesondere der Hochdruckleitung, kein Drehmomentwandler vorgesehen oder vorhanden ist, so dass das hydraulische Medium unmittelbar von der Pumpe zum hydraulischen Motor geführt ist.

Erfindungsgemäß wird zwischen der Pumpe und dem Motor ein die Hochdruckleitung und die Niederdruckleitung verbindendes, vorzugsweise direkt verbindendes, und stufenlos regulierbares Abspritzsystem eingeführt, wobei das Abspritzsystem durch die Steuerung derart ansteuert wird, dass ein Teil des Volumenstroms durch das Abspritzsystem fließt. Hierbei ist der Begriff stufenlos derart zu verstehen, dass das Abspritzsystem innerhalb eines ihm zugewiesenen Arbeitsbereiches von einem Minimalvolumen, welches Null betragen kann, bis hin zu einem Maximalvolumen jegliches Volumen stufenlos einstellbar ist.

Hierdurch ist es möglich, den hydraulischen Motor mit einem konstanten Volumenstrom zu betreiben. Der Teil des Volumenstroms, welcher aufgrund von Drehzahlschwankungen des Rotors zusätzlich in die Hochdruckleitung gepumpt wird, wird über das Abspritzsystem von der Hochdruckleitung zur Niederdruckleitung geführt. Wird der mittels der Pumpe transportierte Volumenstrom als Qₚ' und der am Motor eingestellte Volumenstrom als Qₘ' bezeichnet, so führt das stufenlos regulierbare Abspritzsystem die Differenz zwischen Qₚ' und Qₘ' von der Hochdruckleitung an die Niederdruckleitung ab. Die Volumenströme beziehen sich jeweils auf den Arbeitspunkt der Pumpe bzw. des Motors.

Die Leistung der Windturbine beträgt P=p*Q. Das Abspritzsystem wird so eingestellt, dass dem Rotor nur soviel Leistung entzogen (und dem hydraulischen Motor zugeführt) wird, wie der Rotor unter Beibehaltung seines vorzugsweise optimalen Wirkungsgradbereichs liefern kann.

So kann das stufenlos regulierbare Abspritzsystem in einem Betriebszustand beispielsweise zwischen 10 und 90 %, vorzugsweise zwischen 10% und 40%, des gesamten von der hydrostatischen Pumpe in die Hochdruckleitung gepumpten Volumenstroms aufnehmen. Die Regulierung des stufenlos regulierbaren Abspritzsystems wird durch die Steuerung vorgenommen. Dabei werden in der Steuerung Betriebsdaten der Windturbine, insbesondere des Generators und des Rotors gesammelt und an die Steuerung geleitet. Die Steuerung erfasst diese Daten und verwendet diese, um das stufenlos regulierbare Abspritzsystem derart einzustellen, dass pro Zeiteinheit die Differenz des Volumens Vₚ und des Volumens Vₘ von der Hochdruckleitung durch das Abspritzsystem zur Niederdruckleitung fließt. Als Kenngrößen für die Steuerung kommen beispielsweise die Drehzahl des Rotors, die vom Generator abgegebene Leistung, sowie die Druckdifferenz über der hydraulischen Pumpe unter anderem in Betracht, welche in Echtzeit von Sensoren erfasst werden können.

Das stufenlos regulierbare Abspritzsystem unterscheidet sich von einem hydraulischen Motor mit veränderbarem Schluckvolumen dahingehend, als dass dem geschlossenen Kreislauf am stufenlos regulierbaren Abspritzsystem keine Leistung entnommen wird.

Es ist zu beachten, dass sich das stufenlos regulierbare Abspritzsystem deutlich von einem die Hochdruckleitung und die Niederdruckleitung verbindenden Überdrückventil oder einem Anlaufventil unterscheidet, da diese lediglich eine digitale Antwort in dem Sinne geben, dass die Ventile geöffnet oder geschlossen sind. Das Überdruckventil wird bei einem Druck, welcher das System schädigen kann, geöffnet. Ein Anlaufventil wird geöffnet, wenn der Rotor lastlos anlaufen soll.

Weitere Ausführungsformen sind den untergeordneten Ansprüchen entnehmbar.

In einer Ausführungsform weist das Abspritzsystem mindestens ein in einem Arbeitsbereich stufenlos regulierbares Steuerventil auf. Dabei befindet sich das Steuerventil in einer die Hochdruckleitung und die Niederdruckleitung direkt verbindenden Leitung. Der Arbeitsbereich des Ventils kann an die Leistung der Windturbine angepasst werden. Die hydraulische Pumpe und der mindestens eine hydraulische Motor sind abhängig von der Gesamtleistung der Windkraftturbine so gewählt bzw. eingestellt, dass der Motor bei einer an den Generator angepassten Nenndrehzahl das vollständige Volumen der Pumpe bei der Startdrehzahl aufnehmen kann. Das zusätzliche Volumen bis zur maximalen Rotornutzdrehzahl wird über das Abspritzsystem abgeführt.

In einer weiteren Ausführungsform weist das stufenlos regulierbare Abspritzsystem eine Kaskade auf. Eine Kaskade kann beispielsweise durch vorzugsweise zwei oder mehr zuschaltbare Durchflüsse mit vorzugsweise jeweils konstantem Querschnitt gebildet werden. Besonders vorteilhaft ist es, wenn die Querschnitte der Durchflüsse jeweils im Verhältnis 1:2 stehen. Durch eine binäre Ansteuerung der Durchflüsse kann durch Zuschaltung der verschiedenen Durchflüsse der durch die Kaskade fließenden Volumenstrom in ganzzahligen Schritten, basierend auf dem Volumen des kleinsten Durchflusses, geschaltet werden. Zusätzlich ist entweder ein von der Kaskade getrenntes stufenlos regulierbares Steuerventil oder eine innerhalb der Kaskade stufenlos regulierbare Vorrichtung vorhanden, dessen Arbeitsbereich jeweils zwischen 0 und einem Volumen größer oder gleich dem Volumen des kleinsten zuschaltbaren Durchflusses der Kaskade ist. Hierdurch kann der gesamte von der Kaskade vorgegebene Arbeitsbereich stufenlos eingestellt werden, wobei das stufenlos regulierbare Steuerventil bzw. Vorrichtung die analoge Feinjustage regelt.

Optional weist die Windturbine einen an der Niederdruckleitung angeordneten Niederdruckspeicher auf, welcher ebenfalls geschlossen ausgeführt ist und somit den geschlossenen Kreislauf nicht unterbricht. Mithilfe des Niederdruckspeichers ist es möglich, selbst bei plötzlich aufkommenden Drehzahlsteigerungen des Rotors mehr hydraulisches Medium aus dem Niederdruckspeicher zur Verfügung zu stellen. Dieses wird falls notwendig über das Abspritzsystem wieder dem Niederdruckspeicher zugeführt. Zudem sind ein Speise- und Spülkreislauf sowie eine Steuerung zum Regulieren eines Volumenstroms im geschlossen Kreislauf, sowie mindestens ein Sensor zur Erfassung der Bewegung der ersten und der zweiten Welle bzw. Leistung des Generators sowie der Erfassung einer Druckdifferenz zwischen der Hochdruck- und der Niederdruckleitung vorhanden.

In einer weiteren Ausführungsform ist die Steuerung zur Regulierung des Volumenstroms mit einem oder mehreren der nachfolgenden Sensoren verbunden: dem Sensor der ersten Welle, dem Sensor der zweiten Welle bzw. dem Sensor zur Erfassung der Leistung des Generators oder dem Sensor zur Erfassung der Druckdifferenz. Hierdurch ist es möglich der Steuerung die von den Sensoren aufgenommenen Daten jederzeit und in Echtzeit zuzuführen. Die Verbindung kann sowohl drahtgebunden als auch drahtlos sein. Die Steuerung kann zudem Kennfelder anlegen, welche zur schnellen Schaltung und Regulierung des Abspritzsystems notwendig sind. Diese Kennfelder können im laufenden Betrieb der Windturbine verfeinert bzw. erstmalig ermittelt werden und umfassen Daten oder aufbereitete Daten der Sensoren.

In einer weiteren Ausführungsform weist die Windturbine eine Vorrichtung zur Erfassung von Wetterdaten auf, wobei diese Vorrichtung mit der Steuerung verbunden ist. Da das Wetter großen Einfluss auf die "Qualität" des Windes und somit der dem Wind entnehmbaren Energie hat, empfiehlt es sich verschiedene Parameter des Wetters zu erfassen und der Steuerung zur Verfügung zu stellen. Dies betrifft insbesondere diejenigen Werte, welche zur Ermittlung der Luftdichte notwendig sind, wie beispielsweise die Lufttemperatur und die Luftfeuchtigkeit.

In einer weiteren Ausführungsform ist der hydraulische Motor der Windturbine ein Feststellmotor, welcher gegenüber einem Motor mit veränderbarem Schluckvolumen einen deutlich besseren Wirkungsgrad aufweist. Der Wirkungsgrad ist dabei insbesondere im Druckbereich der im geschlossenen Kreislauf der Windturbine auftretenden Drücke besser als bei einem Motor mit veränderbarem Schluckvolumen. Zudem sind die Baugröße, die Anschaffungskosten und die Lebensdauer der Feststellmotoren vorteilhaft. Die Verwendung eines beispielsweise mit einem Synchrongenerator verbundenen Feststellmotors ist möglich, da der zusätzliche von der hydraulischen Pumpe zur Verfügung gestellte Volumenstrom über das stufenlos regulierbare Abspritzsystem abgeführt werden kann. Hierdurch verbessert sich der Gesamtwirkungsgrad der Anlage.

Ob der Motor einen Synchrongenerator oder einen asynchronen Induktionsgenerator antreibt, hängt vom Verwendungszweck der Windturbine ab. Die Verwendungsfelder der verschiedenen Generatoren sind dem Fachmann hinlänglich bekannt.

In einer weiteren Ausführungsform weist die Windturbine einen zweiten hydraulischen Motor auf, welcher mit der zweiten Welle verbindbar und schaltungstechnisch zwischen dem Abspritzsystem und dem ersten hydraulischen Motor angeordnet ist. Hierdurch ist es möglich, eine Leistungsbereichsregulierung/ -optimierung in Abhängigkeit von der zur Verfügung stehenden Windleistung vorzunehmen. Dabei bietet es sich an, sowohl vor dem ersten und zweiten hydraulischen Motor, jedoch nach dem Abspritzsystem jeweils ein Sperrventil für den jeweiligen Motor anzubringen.

Eine Alternative zu dieser Ausführungsform ist es, einen zweiten hydraulischen Motor mittels einer dritten Welle mit einem zweiten Generator zu verbinden, wobei der zweite hydraulische Motor schaltungstechnisch zwischen dem Abspritzsystem und dem ersten hydraulischen Motor angeordnet ist. Hierbei wird der zweite hydraulische Motor mit dem ersten hydraulischen Motor parallel geschaltet und treibt über eine eigenständige Welle einen weiteren Generator an. Auch diese Ausführungsform dient der Leistungsbereichsregulierung.

Die Verwendung eines zweiten oder ggf. dritten hydraulischen Motors ist insbesondere bei Windturbinen mit einem großen Drehzahlbereich des Rotors sinnvoll. Dabei können die zweiten hydraulischen Motoren einen kleineren oder größeren Volumenstrom gegenüber dem ersten hydraulischen Motor aufnehmen und situationsabhängig in den geschlossenen Kreislauf zu koppeln, um optimale Arbeitspunkte zu erreichen. Der aufzunehmende Volumenstrom des ersten hydraulischen Motors kann auf die Rotorstartdrehzahl ausgelegt sein, der aufzunehmende Volumenstrom des zweiten hydraulischen Motors auf eine Drehzahl des Rotors bei Teillast und der von beiden hydraulischen Motoren aufnehmbare unter der maximalen Rotornutzdrehzahl. So kann die an den oder die Generatoren abgeführte Leistung angepasst werden.

In einer weiteren Ausführungsform ist nach dem Abspritzsystem, jedoch vor etwaigen hydraulischen Motoren ein Sperrventil in den geschlossenen Kreislauf, diesen öffnend oder unterbrechend, eingebracht. Durch das Trennen der Verbindung der Hochdruckleitung zum Motor und die Regulierung des Volumenstroms durch das stufenlos regulierbare Abspritzsystem wird eine stufenlos regulierbare Bremse zum Abbremsen des Rotors und damit verbunden ein vom Betriebszustand verschiedener Bremszustand definiert.

In einer weiteren Ausführungsform kann ein derartiges Sperrventil auch vor das stufenlos regulierbare Abspritzsystem, jedoch nach dem Überdruckventil angeordnet werden, um eine Notfallabschaltung der Windturbine zu ermöglichen.

In einer weiteren Ausführungsform ist der Windrotor ein Zwei-Blatt- oder Drei-Blattrotor. Die dem jeweiligen Rotor zugeordnete Welle verläuft vorzugsweise horizontal.

Weitere Ausführungsformen werden anhand der Ausführungsbeispiele erläutert. Hierbei sei darauf hingewiesen, dass die Ausführungsbeispiele bzw. einzelne Elemente hiervon miteinander kombiniert oder weggelassen werden können. Zudem werden die Verfahren zum Betrieb einer erfindungsgemäßen Windturbine ebenfalls beansprucht.

Es zeigen:
- Figur 1a: ein erstes Ausführungsbeispiel einer Windturbine;
- Figur 1b: eine Variante des ersten Ausführungsbei- spiel einer Windturbine;
- Figur 2: Detailansicht eines stufenlos regulierbaren Abspritzsystems;
- Figur 3: zweites Ausführungsbeispiel einer Windturbine;
- Figur 4: drittes Ausführungsbeispiel einer Windturbine;
- Figur 5: viertes Ausführungsbeispiel einer Windturbine;
- Figur 6: fünftes Ausführungsbeispiel einer Windturbine.

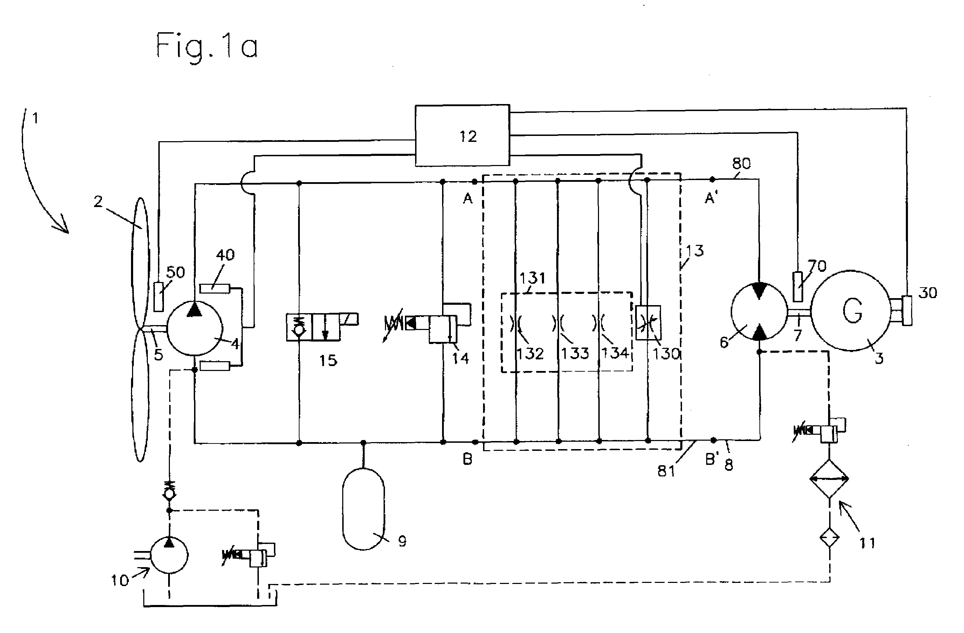

In der Figur 1a ist eine schematische Darstellung einer Variante der erfindungsgemäßen Windturbine dargestellt. Hierbei ist zu berücksichtigen, dass die gesamt Windturbine 1 sowohl in der Gondel einer Windkraftanlage, als auch über die Gondel und den Turm oder ähnliches verteilt angeordnet sein kann.

Die Windturbine 1 weist einen Rotor 2 und einen Generator 3 auf. Der Rotor 2 ist mit einer hydraulischen Pumpe 4 über eine erste Welle 5 verbunden. Als hydraulische Pumpe 4 kommen beispielsweise Radialkolbenmotor/-pumpeneinheiten in Frage, welche mittels eines auf der ersten Welle 5 angeordneten Exzenters angetrieben wird. Darüber hinaus können auch Axialkolbenmaschinen verwendet werden.

Der Generator 3 ist mit einem hydraulischen Motor 6 über eine zweite Welle 7 mechanisch gekoppelt. Bei dem vorliegenden hydraulischen Motor 6 handelt es sich um einen Feststellmotor mit konstantem Schluckvolumen. Der Vorteil eines Feststellmotors liegt dabei in dem höheren Wirkungsgrad.

Die hydraulische Pumpe 4 ist mit dem hydraulischen Motor 6 über einen geschlossenen Kreislauf 8 verbunden. Der geschlossene Kreislauf 8 weist dabei eine Hochdruckleitung 80 auf, welche ein hydraulisches unter hohem Druck stehendes Medium von der hydraulischen Pumpe 4 direkt zum hydraulischen Motor 6 führt. Um das hydraulische Medium vom hydraulischen Motor 6 zur Pumpe 4 zurückzuführen ist eine Niederdruckleitung 81 vorgesehen. Hierbei ist der Begriff Hochdruckleitung derart definiert, dass der in der Hochdruckleitung anliegende Druck höher ist als der in der Niederdruckleitung anliegende Druck.

An der Niederdruckleitung 81 ist ein Druckspeicher 9 angeordnet. Der Druckspeicher 9 führt dem geschlossen Kreislauf 8 mehr hydraulisches Medium zu, falls das Fördervolumen der hydraulischen Pumpe 4 aufgrund einer sich ändernden Drehgeschwindigkeit der ersten Welle 5 zunimmt.

Bei einer Erhöhung der Drehzahl der ersten Welle 5 wird das hydraulische Medium nahezu verzögerungsfrei aus dem Niederdruckspeicher 9 nachgesaugt, so dass es in der Niederdruckleitung zu keinem zu niedrigen Niederdruck oder Unterdruck kommt. Selbstverständlich ist es auch möglich, den geschlossenen Niederdruckspeicher 9 durch eine äquivalente Konstruktion wie beispielsweise einen schnell reagierenden Speiseölkreislauf zu ersetzen.

Die Windturbine 1 weist zudem einen, lediglich schematisch eingezeichneten, Speiseölkreislauf 10 auf, wie er im Stand der Technik ausführlich bekannt ist. Zudem ist anschließend an den hydraulischen Motor 6 im Bereich der Niederdruckleitung ein Heißölwechselkreislauf 11 vorhanden, welcher heißes Öl aus dem geschlossenen Kreislauf 8 entfernt und durch einen Filter und einen Kühler zu einem Tank führt, wobei dieser Tank mit dem Tank des Speiseölkreislaufs 10 identisch sein kann. Definitionsgemäß sind sowohl der Speisekreislauf 10 als auch der Heißölwechselkreislauf 11 nicht Bestandteil des geschlossenen Kreislaufes 8, sondern sind mit diesem lediglich über Steuerventile verbunden.

Weiterhin weist die Windturbine 1 eine Steuerung 12 auf, welche durch einen Datenverarbeitungsanlage oder einen Mikro-Controller gebildet werden kann. In der Steuerung 12 laufen die von verschiedenen Sensoren aufgenommenen Daten zusammen. Die eingezeichneten zur Steuerung 12 laufenden Verbindungen sind lediglich Datenverbindungen. Dies steht im Gegensatz zu den übrigen durchgezogenen Linien, welche hydraulische Leitungen darstellen.

In der Steuerung 12 werden zum einen die Daten des Sensors zur Erfassung der Bewegung der ersten Welle 50 erfasst. Diese Kenngröße ist wichtig um die vom Rotor 2 an die hydraulische Pumpe 4 abgegebene Leistung zu ermitteln. Zudem empfängt die Steuerung 12 Daten vom Sensor 40, welcher einen Druck in der Hochdruckleitung direkt anschließend an die hydraulische Pumpe 4 und einen Druck in der Niederdruckleitung direkt vor der hydraulischen Pumpe 4 erfasst und die so gemessene Druckdifferenz über der Pumpe weiterleitet. Des Weiteren empfängt die Steuerung 12 Daten vom Sensor 30, welcher die vom Generator 3 abgegebene Leistung erfasst. Weiterhin ist ein optionaler Sensor 70 vorhanden, welcher die Drehgeschwindigkeit der zweiten Welle 7 an die Steuerung 12 übermittelt.

Zwischen den Punkten A und A' in der Hochdruckleitung 80 und den Punkten B und B' in der Niederdruckleitung 81 ist ein Abspritzsystem 13 angeordnet. Dieses stufenlos regulierbare Abspritzsystem 13 weist ein in einem Arbeitsbereich stufenlos verstellbares Regelventil 130 auf. Des Weiteren umfasst das Abspritzsystem 13 eine Kaskade 131 welche im vorliegenden Fall drei zuschaltbare Durchflüsse 132, 133, 134 aufweist.

Das Abspritzsystem 13 bildet eine direkte Verbindung zwischen der Hochdruckleitung 80 und der Niederdruckleitung 81 unter Umgehung des hydraulischen Motors 6. Da es sich bei dem hydraulischen Motor 6 um einen Feststellmotor, welcher einen im Wesentlichen konstanten Volumenstrom verarbeitet oder verarbeiten soll, handelt und die vom Rotor 2 zur Verfügung gestellte Leistung, und demzufolge der Volumenstrom im geschlossenen Kreislauf 8 jedoch schwankt, reguliert die Steuerung 12 das stufenlos regelbare Abspritzsystem 13 derart, dass der überschüssige Volumenstrom, welcher durch den Feststellmotor nicht aufgenommen werden soll oder kann durch das Abspritzsystem 13 abgeführt wird. Die Steuerung 12 bestimmt anhand der ihr vorliegenden Sensordaten die jeweilige notwendige Regulierung des Teils des Volumenstroms, welcher vom Abspritzsystem 13 abgeführt werden soll oder muss und das stufenlos regelbare Ventil 130 und die Kaskade 131 dementsprechend ansteuert.

Die Windturbine 1 weist zusätzlich zu dem stufenlos regulierbaren Abspritzsystem 13 ein in Deutschland gesetzlich vorgeschriebenes, technisch jedoch optionales Überdruckventil 14 und ein Anlaufventil 15 auf. Diese unterscheiden sich qualitativ vom Abspritzsystem dahingehend, dass diese lediglich eine digitale Antwort geben können, das heißt jeweils entweder geöffnet oder geschlossen sind.

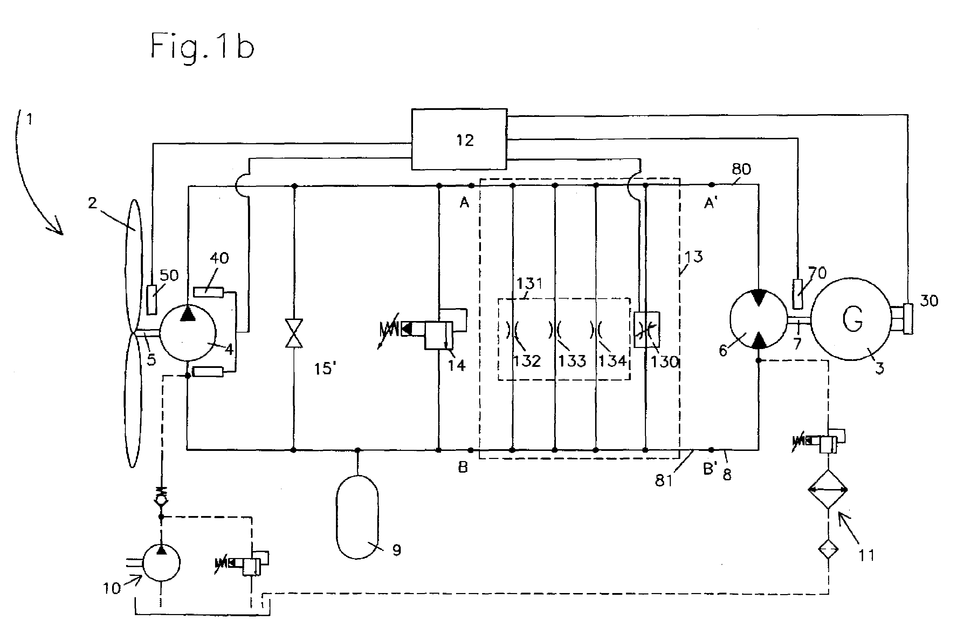

Die Figur 1b ist im Wesentlichen mit der Figur 1a identisch, wobei das Anlaufventil 15' im Gegensatz zum Anlaufventil 15 einfacher ausgebildet ist. Das Anlaufventil 15 der Figur 1a ist eine Kombination aus einem Anlaufventil und einem Nachsaug- und Füllventil.

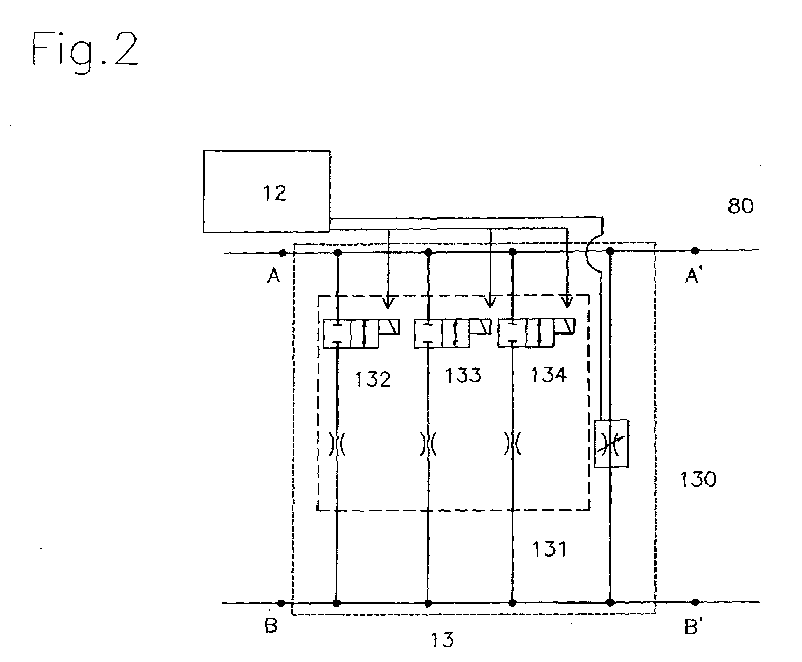

Nachfolgend soll anhand der Figur 2 die Funktionsweise eines erfindungsgemäßen Abspritzsystems 13 erläutert werden. Der Einfachheit halber sind hierbei die in der Figur 1a eingezeichneten Verbindungen zwischen der Steuerung 12 und den Sensoren 30, 40, 50 und 70 nicht eingezeichnet.

Das Abspritzsystem 13 weist ein in einem Arbeitsbereich stufenlos regulierbares Steuerventil 130 sowie eine Kaskade 131 auf. Die Kaskade 131 umfasst vorliegend drei Durchflüsse 132, 133, 134, welche jeweils mittels eines durch die Steuerung angesteuerten Sperrventils, wie einem 2/2-Wegeventil, zuschaltbar sind. Die Durchflüsse 132, 133, 134 weisen jeweils einen konstanten, jedoch verschiedenen Querschnitt auf. D.h. das durch einen Durchfluss strömende Volumen ist durch den Querschnitt festgelegt. Die Sperrventile steuern lediglich, ob das hydraulische Medium durch einen Durchfluss strömen kann oder nicht: Ist das Sperrventil geschlossen, fließt kein Volumenstrom durch den dem Sperrventil zugeordneten Durchfluss. Ist das Sperrventil geöffnet, fließt ein aufgrund des beispielsweise konstanten Querschnitts konstanter Volumenstrom durch den Durchfluss. Die Durchflüsse können z.B. als Drossel oder Blende ausgebildet sein. Obgleich die Sperrventile in den übrigen Figuren nicht eingezeichnet sind, sind diese auch in den übrigen Ausführungsbeispielen vorhanden.

Das vom Durchfluss 132 aufnehmbare Volumen wird nachstehend als das Volumen Vₖ₁ bezeichnet. Das Volumen des Durchflusses 133 ist Vₖ₂, welches in etwa 2 x Vₖ₁ beträgt. Das vom Durchfluss 134 aufnehmbare Volumen beträgt Vₖ₃, welches in etwa 4 x Vₖ₁, beträgt.

Da sich das aufnehmbare Volumen (bzw. Volumenstrom) bzw. der Querschnitt der einzelnen Durchflüsse im Verhältnis 1:2:4 zueinander stehen, kann das aufnehmbare Volumen der Kaskade durch entsprechende Schaltung der Kaskade 131 derart eingestellt werden, dass die Volumen von 0 bis ca. 7 x Vₖ₁ digital, dass heißt in ganzzähligen Schritten eingestellt werden können. Selbstverständlich ist es möglich durch weitere Durchflüsse diesen Arbeitsbereich weiter zu erhöhen.

Bei einer derartigen Kaskadenschaltung, ist der Arbeitsbereich des stufenlos regulierbaren Steuerventils 130 größer oder gleich dem Volumen von 0 bis Vₖ₁. Das Steuerventil 130 trägt demnach Sorge, dass der gesamte Bereich von 0 bis 7 x Vₖ₁ tatsächlich stufenlos regulierbar durchfahren werden kann.

Dies sei an nachfolgendem Beispiel genauer erläutert: Zum Zeitpunkt t₁ ist zunächst der Durchfluss 132 geöffnet. Da der vom Abspritzsystem 13 aufzunehmende Volumenstrom weiter ansteigt, wird das steuerbare Ventil 130 von einer geschlossenen Stellung stufenlos über einen Zeitraum δ*t* hinweg auf das Volumen Vₖ₁ geöffnet. In diesem Moment t₁+δ*t* wird der Durchfluss 133 geöffnet, indem das zugeordnete 2/2-Wegeventil in die geöffnete Stellung gebracht wird. Zeitgleich wird das 2/2-Wegeventil des Durchflusses 132 in die geschlossene Stellung gebracht und das Durchflussvolumen des Steuerventils 130 auf 0 reduziert. Steigt der Volumenstrom weiter an, wird das Steuerventil 130 über einen Zeitraum δ*t*₂ wieder entsprechend geöffnet. Analog kann auf eine Reduzierung des Volumenstroms reagiert werden. Anhand dieses Beispieles ist ersichtlich, wie das stufenlos regelbare Abspritzsystem 13 in der Figur 2 dargestellten Beispiel aufgebaut ist und von der Steuerung 12 angesteuert wird.

Es ist bei entsprechender Bemessung des Arbeitsbereiches eines stufenlos regulierbaren Steuerventils 130 auch möglich ein Abspritzsystem ohne Kaskade auszubilden. Auch ist es möglich, das stufenlos regulierbare Steuerventil als Teil der Kaskade auszubilden. Eine weitere Variante ist es, den Querschnitt der jeweiligen Durchflüsse konstant und jeweils gleich auszubilden. Die Ansteuerung ändert sich dann dementsprechend.

Das Abspritzsystem 13 bzw. eine der oben aufgeführten Varianten davon bildet eine direkte Verbindung von der Hochdruckleitung 80 zur Niederdruckleitung 81. Am Abspritzsystem 13 wird im geschlossenen Kreislauf 8 bzw. der Windturbine 1 jedoch keine Leistung entnommen.

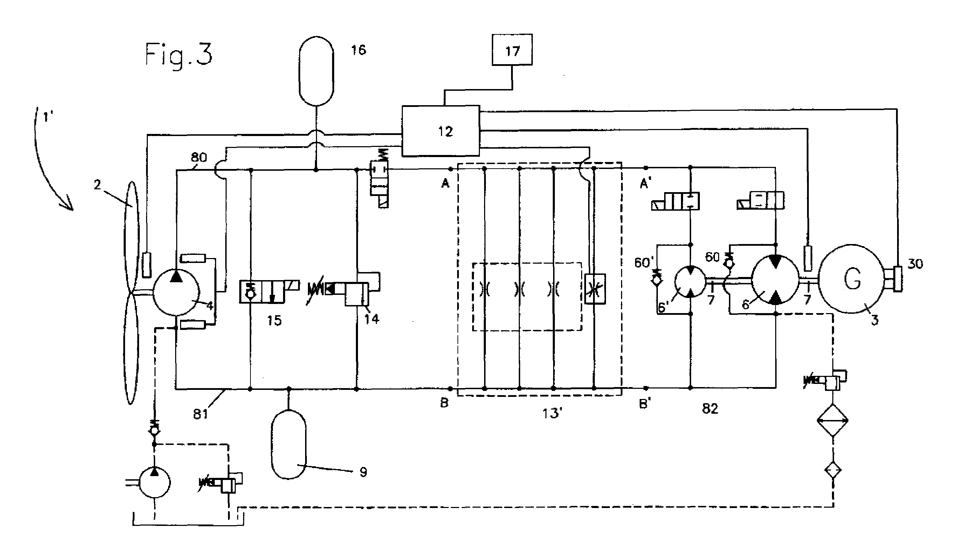

Anhand der Figur 3 wird ein weiteres Ausführungsbeispiel einer Windturbine erläutert. Zusätzlich zu den in den Figuren 1 und 2 erläuterten Elementen weist die Windturbine 1' über einen zweiten hydraulischen Motor 6' sowie zusätzliche Sperrventile in der Form von 2/2-Wegeventilen. Der die Hochdruckleitung 80 und die Niederdruckleitung 81 verbindende Abschnitt 82, innerhalb dessen der zweite hydraulische Motor 6' angeordnet ist, zweigt zwischen dem Punkt A' und dem hydraulischen Motor 6 aus der Hochdruckleitung 80 ab und fügt sich zwischen dem hydraulischen Motor 6 und dem Punkt B' der Niederdruckleitung ein.

Der zweite hydraulische Motor 6' treibt ebenfalls die zweite Welle 7 an. Im Abschnitt 82 selbst ist zudem ein optionales 2/2-Wegeventil 84 angeordnet, mithilfe dessen der zweite hydraulische Motor 6' in den geschlossenen Kreislauf 8 hinzugeschaltet werden kann. Im vorliegenden Beispiel ist der zweite hydraulische Motor 6' ebenfalls ein Feststellmotor, welcher jedoch zur Leistungsbereichsregulierung einen kleineren Volumenstrom als der hydraulische Motor 6 aufnimmt.

Zwischen der Abzweigung des Abschnitts 82 von der Hochdruckleitung 80 und dem hydraulischen Motor 6 ist ein weiteres 2/2-Wegeventil 83 angeordnet, welches in einem ersten Betriebszustand geöffnet ist. Da der hydraulische Motor 6 vom zweiten hydraulischen Motor 6' verschieden ist, kann durch eine Hinzuschaltung des zweiten Motors 6' ein zweiter Betriebszustand gefahren werden. In einem dritten Betriebszustand ist das dem Motor 6 zugeordnete Sperrventil geschlossen und der Motor 6' treibt die Welle 7 alleine an. Hierdurch kann eine Leistungsbereichsoptimierung der Windturbine 1' vorgenommen werden.

Den hydraulischen Motoren 6, 6' ist jeweils ein Nachsaugventil 60 bzw. 60' zugeordnet. Hiermit kann der jeweilige hydraulische Motor hydraulisches Medium aus der Niederdruckleitung nachsaugen. Dies könnte beispielsweise bei geschlossener Stellung der Ventile 83, 84 notwendig sein, um die Motoren bei trägheitsbedingtem Nachlauf vor Schaden zu schützen.

Das in der Figur 3 dargestellte Abspritzsystem 13' kann in der Hochdruckleitung 80 zwischen der Abzweigung zum Ventil 130 und dem Punkt A' zusätzlich zu den Merkmalen des in der Figur 1a dargestellten Abspritzsystem 13 ein weiteres 2/2-Wegeventil aufweisen. Dieses nicht eingezeichnete 2/2-Wegeventil ist in den Betriebszuständen geöffnet. Durch Schließen dieses 2/2-Wegeventils (oder eines anderen äquivalent funktionierenden Ventils) wird ein geregelter Bremszustand herbeigeführt, wobei den hydraulischen Motoren 6 bzw. 6' kein hydraulisches Medium mehr zugeführt wird. Der gesamte Volumenstrom fließt nun von der Hochruckleitung 80 durch das Abspritzsystem 13' zur Niederdruckleitung 81 und der Rotor 2 kann geregelt abgebremst werden. Der geregelte Bremszustand kann alternativ durch Schließen der Ventile 83 und 84 herbeigeführt werden.

Zudem befindet sich in der Hochdruckleitung 80 zwischen der Abzweigung zum Überdruckventil 14 und vor dem Abspritzsystem 13, das heißt dem Punkt A ein 2/2-Wege-Ventil 85 in der Hochdruckleitung 80 selbst. Dieses 2/2-Wege-Ventil wird ebenfalls durch die Steuerung 12 angesteuert und bewirkt im geschlossenen Zustand eine Notfallbremsung des Rotors 2. Die gesamte Leistung wird nun über das Überdruckventil 14 und die hydraulische Pumpe 4 abgeführt.

In der Figur 3 ist weiterhin eine Vorrichtung 17 zur Erfassung von Wetterdaten eingezeichnet. Die Vorrichtung 17 erfasst beispielsweise die Luftfeuchtigkeit und die Lufttemperatur. Mithilfe dieser Größen kann die Luftdichte ermittelt werden, wobei diese Information mit den anderen Sensordaten zur Regulierung des Abspritzsystems herangezogen wird.

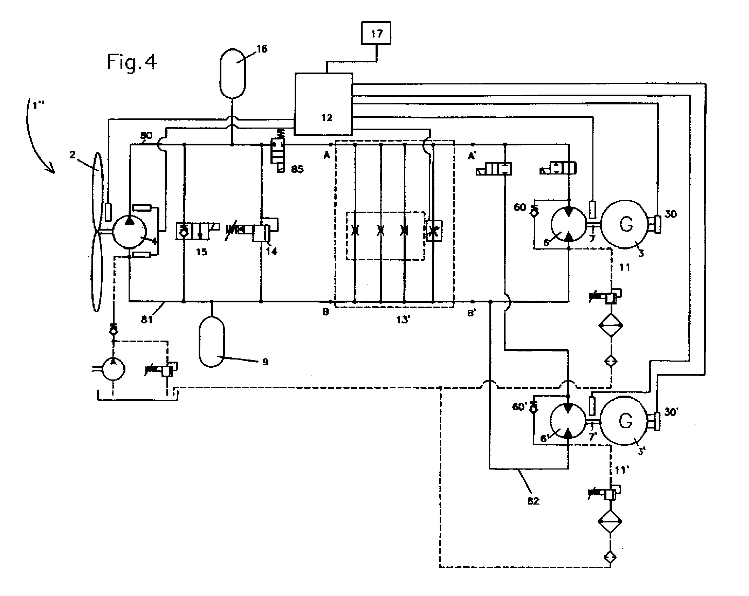

Ein weiteres Ausführungsbeispiel einer Windturbine wird anhand der Figur 4 erläutert. Die in der Figur 4 dargestellte Windturbine 1" weist einen zweiten hydraulischen Motor 6' auf, welcher im Abschnitt 82 angeordnet ist. Entgegen dem Ausführungsbeispiel der Figur 3 treibt der hydraulische Motor 6' jedoch nicht die zweite Welle 7 und somit den Generator 3 an, sondern ist über eine dritte Welle 7' mit einem zweiten Generator 3' verbunden. An dem zweiten Generator 3' ist ein weiterer Sensor zur Ermittlung der Leistungsdaten 30' des Generators 3' angeordnet, dessen Daten wiederum an die Steuerung 12 übermittelt werden. Weiterhin ist an der Welle 7' ein Drehzahlsensor 70' angeordnet.

Obgleich in den Ausführungsbeispielen der Figuren 3 und 4 jeweils nur ein einzelner Motor in Serie oder in Reihe geschaltet wurde, ist es in dem geschlossenen Kreislauf 8 selbstredend möglich mehr als zwei Motoren in Serie bzw. in Reihe zuzuschalten.

In der Figur 4 befindet sich im Abschnitt 82 nach dem zweiten hydraulischen Motor 6' zudem ein Ventil 11', über welches eine Verbindung zum Heißölwechselkreislauf herstellbar ist, auf. Die in den Figuren 3 und 4 nicht kennzeichneten Elemente sind mit den gekennzeichneten Elementen der Figur 1a identisch.

Die weiteren in der Figur 4 dargestellten Elemente sind unabhängig von dem zweiten hydraulischen Motor 6' und können auch in den anderen Ausführungsbeispielen verwendet werden. Dies betrifft zum einen die Verwendung eines Hochdruckspeichers 16, welcher im Bereich der Hochdruckleitung 80 nach der Abzweigung zum Überdruckventil und vor dem Abspritzsystem angeordnet ist. Hierdurch können kurzfristige Druckschwankungen ausgeglichen werden.

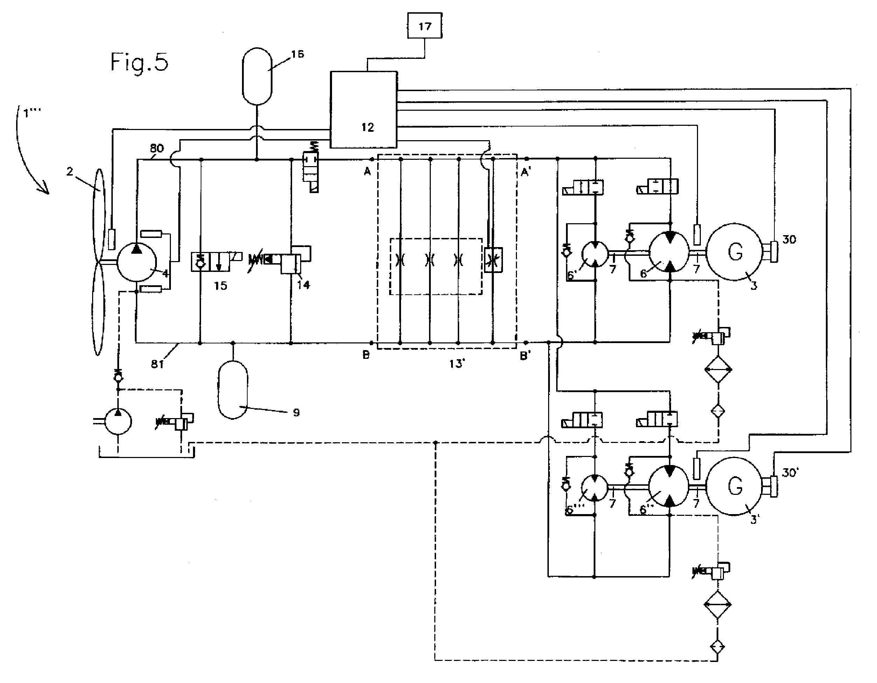

In der Figur 5 ist eine weitere Variante einer erfindungsgemäßen Windturbine 1"' dargestellt. In dieser Variante sind insgesamt 4 hydraulische Motoren 6, 6', 6" und 6"' angeordnet. Die Motoren 6 und 6' sind der Welle 7, die Motoren 6" und 6"' sind der Welle 7' zugeordnet. Sämtliche Motoren sind Feststellmotoren mit festem Schluckvolumen. Die Windturbine 1"' kombiniert die Varianten der Figuren 3 und 4 miteinander. Dies dient einer verbesserten Leistungsregulierung der Windturbine.

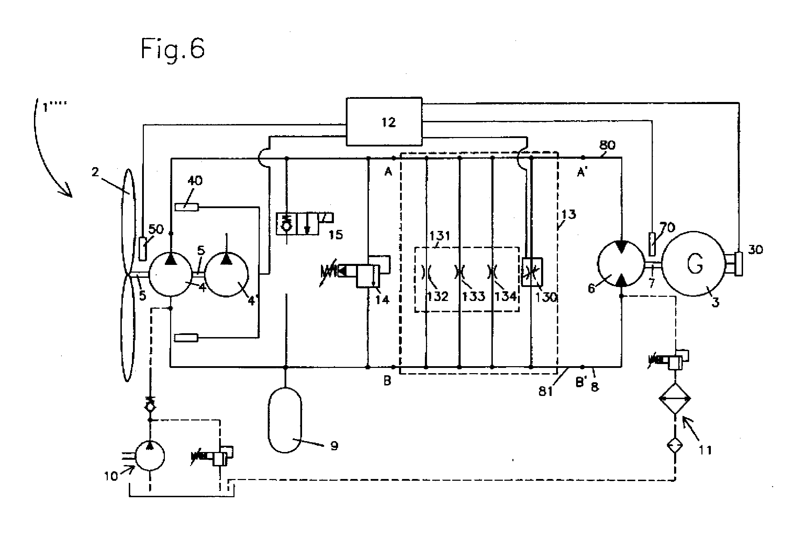

In der Figur 6 ist eine weitere Windturbine 1"" dargestellt. In dieser Variante weist die Windturbine eine zusätzliche hydraulische Pumpe 4' Diese kann bei Bedarf an die Welle 5 gekoppelt werden, wobei sich die Volumenströme der Pumpe 5 und der Pumpe 5' zu einem kombinierten Volumenstrom verbinden.

Um auf Erfahrungswerte zur Ansteuerung der Abspritzsysteme der verschiedenen Ausführungsbeispiele zurückzugreifen, kann die jeweilige Steuerung 12 Kennfelder anlegen, aus welchen die unter den vorherrschenden Bedingungen optimalen Werte zur Ansteuerung des Abspritzsystems herausgegriffen werden.

## Patentansprüche

1. Windturbine (1; 1';1"), welche
einen Rotor (2),
mindestens einen ersten Generator (3),
eine hydraulische Pumpe (4), welche über eine erste Welle (5) mit dem Rotor verbunden ist, mindestens einen erster hydraulischen Motor (6), welcher über eine zweite Welle (7) mit dem mindestens einen ersten Generator (3) verbunden ist,
einen geschlossener Kreislauf (8), welcher eine Hochdruckleitung (80) zum Führen eines hydraulischen Mediums von der Pumpe (4) zum mindestens einen Motor (6) und eine Niederdruckleitung (81) zum Führen des hydraulischen Mediums vom mindestens einen Motor (6) zur Pumpe (4) aufweist, sowie eine Steuerung (12) zum Regulieren eines Volumenstroms im geschlossenen Kreislauf umfasst,
**dadurch gekennzeichnet, dass** zwischen der Pumpe (4) und dem Motor (6) ein die Hochdruckleitung und die Niederdruckleitung verbindendes stufenlos regulierbares Abspritzsystem (13; 13') vorhanden ist.

2. Windturbine nach Anspruch 1, **dadurch gekennzeichnet, dass** das Abspritzsystem mindestens ein in einem Arbeitsbereich stufenlos regulierbares Steuerventil (130) aufweist.

3. Windturbine nach einem der Ansprüche 1 oder 2, **dadurch gekennzeichnet, dass** das Abspritzsystem eine Kaskade (131) aufweist, welche vorzugsweise mindestens zwei oder mehr zuschaltbare Durchflüsse (132,133,134) mit vorzugsweise jeweils konstantem Querschnitt umfasst.

4. Windturbine nach einem der vorhergehenden Ansprüche, **dadurch gekennzeichnet, dass** die Steuerung (12) das Abspritzsystem (13; 13') derart ansteuert, dass ein Teil des Volumenstroms durch das Abspritzsystem (13; 13') fließt.

5. Windturbine nach einem der vorhergehenden Ansprüche, **dadurch gekennzeichnet, dass** mindestens ein Sensor zur Erfassung der Bewegung der ersten (50) und/oder mindestens ein Sensor zur Erfassung der Bewegung der zweiten (70) Welle und/oder mindestens ein Sensor zur Erfassung der Leistung des Generators (30) und/oder mindestens ein Sensor zur Erfassung einer Druckdifferenz (40) zwischen der Hochdruck- und der Niederdruckleistung vorhanden ist.

6. Windturbine nach einem der vorhergehenden Ansprüche, **dadurch gekennzeichnet, dass** die Steuerung (12) zur Regulierung des Volumenstroms mit dem Sensor der ersten Welle (50), dem Sensor der zweiten Welle (60) und dem Sensor zur Erfassung der Druckdifferenz (40) verbunden ist.

7. Windturbine nach einem der vorhergehenden Ansprüche, **dadurch gekennzeichnet, dass** ein mit der Niederdruckleitung (81) verbundener Niederdruckspeicher (9) und/oder ein mit der Hochdruckleitung (80) verbundener Hochdruckspeicher (16) und/oder ein Speiseölkreislauf (10) und/oder eine Heißölwechselkreislauf (11) vorhanden ist.

8. Windturbine nach einem der vorhergehenden Ansprüche, **dadurch gekennzeichnet, dass** eine Vorrichtung (17) zur Erfassung von Wetterdaten vorhanden ist und die Vorrichtung mit der Steuerung verbunden ist.

9. Windturbine nach einem der vorhergehenden Ansprüche, **dadurch gekennzeichnet,**
**dass** ein zweiter hydraulischer Motor (6') vorhanden ist, welcher mit einer zweiten Welle (7') verbindbar ist.

10. Windturbine nach einem der Ansprüche 1 bis 7, **dadurch gekennzeichnet, dass** ein zweiter hydraulischer Motor (6') und ein zweiter Generator (3') vorhanden ist, wobei der zweite hydraulische Motor (6') mittels einer dritten Welle (7') mit dem zweiten Generator (3') verbunden ist.

11. Windturbine nach einem der vorhergehenden Ansprüche, **dadurch gekennzeichnet, dass** der geschlossene Kreislauf (8) zusätzlich zum Abspritzsystem (13; 13') ein die Hochdruckleitung und die Niederdruckleitung direkt verbindendes Überdruckventil (14) und/oder ein Anlaufventil (15) aufweist.

12. Windturbine nach einem der vorhergehenden Ansprüche, **dadurch gekennzeichnet, dass** mindestens ein weiteres Ventil zum Sperren des geschlossenen Kreislaufs vorhanden ist.
